# EUROPEAN PATENT SPECIFICATION

(11) **EP 4 302 078 B1**
(45) Date of publication and mention of the grant of the patent: **08.10.2025**
(21) Application number: 22707254.3
(22) Date of filing: 01.03.2022
(51) Int. Cl.: G01N 21/70, G01N 21/71

(54) **METHOD AND APPARATUS FOR NANOPARTICLE-ASSISTED SONOLUMINESCENCE CONTRAST IMAGING IN MEDICAL DIAGNOSTICS, PARTICULARLY ONCOLOGY**
VERFAHREN UND VORRICHTUNG ZUR NANOPARTIKELUNTERSTÜTZTEN SONOLUMINESZENZKONTRASTBILDGEBUNG IN DER MEDIZINISCHEN DIAGNOSTIK, INSBESONDERE IN DER ONKOLOGIE
PROCÉDÉ ET APPAREIL D'IMAGERIE PAR CONTRASTE DE SONOLUMINESCENCE ASSISTÉE PAR DES NANOPARTICULES DANS DES DIAGNOSTICS MÉDICAUX, EN PARTICULIER EN ONCOLOGIE

(30) Priority: 04.03.2021 IT 202100005123
(43) Date of publication of application: 10.01.2024
(73) Proprietor: Politecnico Di Torino, 10129 Torino (TO) (IT)
(72) Inventor: CAUDA, Valentina Alice, 10024 Moncalieri (TO) (IT); VIGHETTO, Veronica, 10040 Villar Dora (TO) (IT); CAROFIGLIO, Marco, 70126 Bari (BA) (IT); ANCONA, Andrea, 10128 Torino (TO) (IT)
(74) Representative: Bianchetti & Minoja with Trevisan & Cuonzo IPS SRL
(86) International application number: PCT/IB2022/051802
(87) International publication number: WO 2022/185208

(56) References cited:
- EP-B1- 0 991 429
- WO-A1-2017/218674
- US-A1- 2010 133 447
- JANUSZ BOGDAN ET AL: "Nanoparticles of Titanium and Zinc Oxides as Novel Agents in Tumor Treatment: a Review", NANOSCALE RESEARCH LETTERS, SPRINGER, US, vol. 12, no. 1, 27 March 2017 (2017-03-27), pages 1 - 15, XP021243406, ISSN: 1931-7573, DOI: 10.1186/S11671-017-2007-Y

## Description

The present invention relates to an apparatus and a method to be used in medical diagnostics, for detecting optical signals and forming images derived from cells and/or tissue of an organism, in particular in the antitumor field.

More specifically, the invention relates to a contrast imaging method and related apparatus which provides the ultrasound irradiation of an aqueous medium and the photoemission of sonoluminescence of micro- or nanoparticles, dispersed in said aqueous medium, capable of producing, according to the ultrasound conditions used, a light emission spectrum with specific optical peculiarities, to highlight a particular cell or tissue or organ region, especially in the oncology field. An example of a method of diagnostic imaging of a human or animal subject by using a sonoluminescence imaging method is given in the patent document EP 0 991 429 B1.

According to a peculiar characteristic of the invention, in the use of such a sonoluminescence contrast imaging method on the tissues and organs of a living organism, the use is disclosed of micro and/or nanoparticles of zinc oxide (ZnO) as the contrast agent, which allows obtaining, already at a low ultrasounds (US) irradiation intensity and without contraindication of toxicity, a luminous signal with a characteristic emission spectrum and determined by the presence of said semiconductor material, without needing the presence of noble gases, such as Ar and He, which are not biologically present in human tissues, unlike what happens in the sonoluminescence not assisted by nanoparticles.

The sizes of such micro- and nanoparticles range from 1 nm to 100,000 nm, with nanoparticles ranging from 1 nm to 500 nm, and microparticles ranging from 500 nm to 20,000 nm.

The use of ultrasound irradiation as a contrast agent assisted by nanoparticles of the aforesaid type dispersed in the liquid medium in which the ultrasonic wave passes, for the generation of a photosignal, the intensity of which is modified at precise wavelengths comprised in the UV-visible spectrum, is completely new to the art.

Another aspect of the invention relates to the therapeutic effect deriving from the use of said nanometer-sized ZnO particles which may be internalized within specific diseased cells.

Another aspect of the invention relates to the teaching of equipping said ZnO nanoparticles with targeting molecules (peptides, antibodies, carbohydrates, sugars, etc.), as described further hereafter, to allow their accumulation only in specific cells/tissues/organs, to act as contrast agents only for such specific cells/tissues/organs.

The sonoluminescence contrast imaging apparatus according to the invention comprises at least one container with a solution to be treated in which a contrast agent comprising micro- and/or nanoparticles of zinc oxide (ZnO) is dispersed, at least one source of ultrasounds (US) comprising a signal generator and an electromechanical transducer and at least one ultrasonic transfer medium to said solution to be treated to induce cavitation in the solution itself and the consequent sonoluminescence effects, wherein the dispersed contrast agent (the zinc oxide) can lower the cavitation threshold of the solution, in particular by providing packages of gaseous bubbles by virtue of its surface conformation, and partially absorb the emitted photosignal to re-emit it, at different wavelengths in the visible spectrum to obtain both spectroscopic and image contrast with precise and defined characteristics, to an optical detection unit capable of returning a both two-dimensional and spectroscopic imaging signal of the region hit by the ultrasonic beam + particles.

The sonoluminescence contrast imaging method comprises the following steps:
A) providing at least one contrast agent comprising micro and/or nanoparticles of zinc oxide (ZnO);
B) preparing a solution to be treated, comprising an aqueous medium, a saline solution, an in vitro cell culture medium, a tissue or an organ of a living being;
C) dispersing the contrast agent in the solution to be treated;
D) providing a source of ultrasounds (US), comprising a signal generator and an electromechanical transducer, a signal amplifier, an oscilloscope, and a resistive terminator load;
wherein
the ultrasounds have a variable frequency from 20 kHz to 100 MHz and power varying from 0.01 W cm⁻² to 25,000 W·cm^{-2;} and preferably, variable from 40 kHz to 10 MHz and variable power from 0.1 W'cm⁻² to 10 W·cm⁻²
E) activating the source of ultrasounds (US), wherein the total activation time, possibly administered in multiple steps or cycles, is variable from 1 second to 12 hours, preferably from 5 seconds to 30 minutes;
F) placing the solution to be treated with the dispersed contrast agent in the ultrasonic field;
G) inducing cavitation in the solution to be treated with the dispersed contrast agent, capable of lowering the cavitation threshold of the solution, in particular by providing packages of gaseous bubbles by virtue of its surface conformation;
H) generating sonoluminescence luminous signals from the cavitation bubbles with a characteristic spectrum in the ultraviolet and visible region so that said sonoluminescence luminous signals are collected, absorbed, scattered, and re-emitted by the semiconductor nanoparticles (the contrast agent) to obtain a both spectroscopic and image contrast with precise and defined optical characteristics,
wherein:
the luminous re-emission of the contrast agent provides an increase or decrease in intensity at precise wavelengths comprised in the UV-visible spectrum due to the presence of the contrast, and
I) collecting the photosignal generated by the contrast agent by means of an optical detection unit to return a both two-dimensional and spectroscopic imaging signal of the region hit by the ultrasonic beam + particles.

The most advantageous implementation of the present invention provides the use of the inventions described:
- in Italian Patent no. 102017000129243 filed on 13th November 2017 and entitled "Nanocostrutto biomimetico non immunogenico per la terapia antitumorale" [Biomimetic non-immunogenic nanoconstruct for the antitumor therapy] and in the corresponding international application published under no. WO 2019092550 Al on 16th May 2019; and
- in Italian Patent application no. IT 102018000009966 filed on 31st October 2018 and entitled "Agente sonosensibilizzante e suo metodo di attivazione" [Sonosensitizing agent and activation method thereof] the description of which is referred to for the sake of completeness.

### SCOPE OF THE INVENTION

The therapeutic and diagnostic developments of recent years have seen significant advancements in the antitumor field with particular reference to surgical treatments, chemotherapy, and radiotherapy, but especially with regard to immunotherapy and combined therapies. However, all of these treatments still suffer from issues related to individualization of therapy and the adverse reactions which result in partial, if not total lack of effectiveness of the therapy, with sometimes harmful effects. This problem is constantly addressed in both clinical and experimental research through genetic, genomic, and especially early diagnostic studies. The latter comprises all *imaging techniques* used in clinical diagnostics *in vivo.*

The recent developments in research concern the design of sophisticated contrast agents with high sensitivity and specificity towards the organ or tissue of interest, capable of providing a visual aid to assess the presence of pathology, in particular a tumor pathology, as well as the biodistribution and the therapeutic effect of a drug used for therapeutic treatment.

In recent years, a large number of nanometer-sized semiconductor material particles have been studied for their potential application in optics. It is precisely the nanometric dimensions and the chemical-physical nature of the material that dictate the interesting optical properties which can be obtained. In this sense, many types of semiconductor nanomaterials have been prepared, the most known being quantum dots (QDs), such as CdS, CdSe, CuS, and other composite or core-shell nanomaterials. Quantum dots are nanostructures formed by the inclusion of a semiconductor material, with a givenband gap and typical sizes comparable to the De Broglie wavelength, within another semiconductor with a broader band gap. This structure generates a three-dimensional potential well which confines the charge carriers, electrons and electron holes, in a small region of space in which the energy levels become discrete. The latter property has led to the association between quantum dots and atoms generating the pseudonym "artificial atoms". Their excellent spectroscopic properties have opened up new QDₛ applications in the biomedical field.

Nonetheless, any improvement in the solubility and biocompatibility properties of QDs requires effective chemoselective bioconjugation methods. However, most of such nanomaterials are prepared with toxic reagents and/or complex multi-step reaction processes, as well as being poorly biodistributed or accumulating in organs with persistence, local and/or systemic toxicity effects, and lack of ultimate biodegradation into non-toxic products.

At the current state of knowledge, various approaches have been attempted to replace quantum dots with less toxic materials, and to modify the surface chemistry of the quantum dots with organic materials, such as polymers, lipids, and/or functional molecules with selective targeting capabilities towards cells/tissues/organs of interest.

Examples of this synthesis approach of biodegradable, biocompatible semiconductor nanomaterials which can be equipped with targeting agents, and their use for therapy and imaging, have been described in Italian patent no. 102017000129243 filed on 13th November 2017 and entitled "Nanocostrutto biomimetico non immunogenico per la terapia antitumorale" [Biomimetic non-immunogenic nanoconstruct for the antitumor therapy] by some of the present co-inventors and in the corresponding international application published under no. WO 2019092550 A1 on 16th May 2019. This patent discloses the chemical synthesis of zinc oxide micro- and nanocrystals and the possibility of making a nanoconstruct (containing zinc oxide and coated with lipid bilayers of synthetic or natural origin) for antitumor therapy. In particular, the patent discloses the use of said zinc oxide-based nanoconstructs as diagnostic imaging means and a kit for their use as contrast agents, comprising an injectable solution of said nanoconstructs, electromagnetic radiation emission media with which to irradiate said nanoconstructs, and means for detecting fluorescence radiation emitted by said nanoconstructs as a result of irradiation carried out with said emission means. Specifically, in Patent IT 102017000129243, a nanocrystal of semiconductor material, precisely zinc oxide (ZnO), to be energized with appropriate light sources with wavelengths in the ultraviolet spectrum (100 - 400 nm) is identified as an imaging contrast agent. Therefore, the nanocrystal can re-emit light (fluorescence radiation) in the range which goes from the ultraviolet region to the green region of the visible spectrum (wavelength between 380 nm and 550 nm). To improve the detectability of the fluorescence radiation emitted by the zinc oxide, the invention further discloses the possibility of doping the zinc oxide with a chemical element, which amplifies said radiation or which changes the frequency spectrum of the ZnO fluorescence radiation, e.g., to comprise frequencies in the infrared spectrum. Finally, in the patent, if the metal oxide used does not possess fluorescent properties, it is possible to conjugate the oxide with a dye element (with fluorescent properties), which, if appropriately energized by electromagnetic radiation can re-emit at wavelengths longer than that of the exciting radiation. A further alternative, valid both in the case of using zinc oxide and in the case of using another nanostructured semiconductor oxide, consisted in doping such an oxide with a paramagnetic or diamagnetic element, said element being able to be detected by nuclear magnetic resonance.

Another example of a nanoparticle-assisted imaging approach was described in Italian Patent Application no. IT102018000009966 filed on 31st October 2018 and entitled "Agente sonosensibilizzante e suo metodo di attivazione" [Sonosensitizing agent and activation method thereof], and recently filed as an international application, which discloses an ultrasound contrast agent comprising micro and/or nanoparticles of zinc oxide (ZnO) following ultrasound irradiation.
Specifically, the acoustic scattering of ZnO nanoparticles is detected during ultrasonic irradiation of an aqueous medium containing micro and/or nanoparticles of zinc oxide. It is disclosed how the ultrasonic irradiation of the aqueous medium in the presence of nanoparticles lowers the threshold of inertial acoustic cavitation, promoting the phenomenon of acoustic scattering, and allowing the advantageous use of ZnO particles as a contrast agent for ultrasound imaging.

In contrast to the patents disclosed thus far, the present invention instead intends to disclose a novel image contrast effect arising from the combination of ultrasonic irradiation of an aqueous medium containing micro- or, preferably, nanoparticles of a semiconductor oxide, preferably zinc oxide (ZnO). Such an imaging method is based on sonoluminescence instead of ultrasound contrast, as previously disclosed in Italian Patent Application IT n. 102018000009966.

It is known in the prior art that the passage of an ultrasonic wave (US) through an aqueous medium or a tissue, can have two different consequences, i.e. a thermal effect and a non-thermal effect. The thermal effects of US (ultrasounds) can be exploited to achieve thermoablation of tumor masses, as in high-intensity, focused ultrasound (InFU) therapy.

Conversely, non-thermal effects consist of a large group of phenomena and from a therapeutic point of view are exploited in sonodynamic therapy (SDT). Among these phenomena, acoustic cavitation is the most studied for both therapy and ultrasound imaging. The term "cavitation" refers to the formation and oscillations of microbubbles of gas in the medium under ultrasonic stimulation. The passage of the pressure wave causes compression and rarefaction cycles, in which gaseous bodies (microbubbles) already present in the tissues or the liquid medium can form, expanding and contracting as a result of wave cycles.

In stable cavitation, also known as non-inertial cavitation, the gas microbubbles oscillate around their radius for several cycles, inducing a potential temperature rise, microstreaming effects, radiation forces, and shear stress.

In the case of inertial cavitation, the microbubbles as a result of their expansion beyond a limiting radius, catastrophically collapse on themselves, imploding. The implosion generates very high temperatures (estimated to be about 1000 °C) and high pressures (estimated to be about 500 bar), which are highly localized, i.e. within the gas bubbles and in the first surrounding of the liquid medium. These effects give rise to sonochemical reactions, capable of inducing the formation of various reactive oxygen species (ROS, the most diffuse free radicals) and thus induce oxidative stress in tissues and biological material. Such a microbubble collapse also causes mechanical stress, with microjet and shock wave (SW) formation, and in particular light emission. Therefore, sonoluminescence (SL) is a phenomenon of photon packet emission with an emission spectrum covering ultraviolet (UV) and visible wavelengths and is dependent on the presence of inertial cavitation.

It is generally accepted that the presence of nanoparticles (of whatever nature) in the liquid medium reduces the US (ultrasound) dose required to achieve acoustic inertial cavitation because nanoparticles carry gas packets on their structure by virtue of their nanostructure, surface roughness and/or porosity.

From all of the above, the inventors of the present patent application have hypothesized that it is possible to combine SL (sonoluminescence) emission with a particular type of nanoparticle having well-defined optical properties, to obtain light emissions, which can modify and/or amplify the initial SL emission and allow imaging contrast, well-defined spectral emission, and diagnostic detection.

### • PRIOR ART

Optical imaging is certainly one of the most relevant techniques used in diagnostics nowadays. The currently patented technologies are listed below, with ample description of the most relevant, while reference may be made to the prior art search table on both patents and scientific literature provided at the end of this document for a briefer overview.

Patent EP0991429 B1 "Use of acousto-optical and sonoluminescence contrast agents in diagnostic methods" with the priority of 16th June 1997 discloses an opto-acoustic imaging system in which a focused ultrasound source and a light source interact with the tissues of an organism in the presence of a material capable of absorbing, scattering, emitting light in wavelengths between 300 and 1300 nm. The material used as a contrast agent in the examples disclosed in the patent is of a varied nature, i.e., it may be a solid, semi-solid, liquid particle, or a micellar or lipid vesicle, physiologically acceptable, and containing a gas. The dimensions of the contrast agent referenced in the description of this 1997 patent are preferably either equal to or smaller than the incident wavelength used. The patent also provides an optical system for detecting light radiation in the region between 300 and 1300 nm and also the use of ultrasound-generated sonoluminescence which excites the dye molecules preferably bound to the contrast agent, i.e., particles between 5 nm and 20 *nm.* It is worth noting that in the present patent application, on the contrary, it is suggested to use only ultrasonic radiation to perform the imaging and that the generated sonoluminescence signal directly energizes an optically active nanomaterial, in this case, the nanocrystals of zinc oxide with semiconductor properties without having to equip it with appropriate dye molecules.

Such a feature is neither provided nor suggested in the patent mentioned above. Furthermore, the present application suggests the use of ZnO nanoparticles as a contrast agent capable of returning precise optical and spectroscopic spectral characteristics, a characteristic not mentioned in the aforesaid patent. Furthermore, the aforesaid patent expressly requires the use of materials/vesicles/micelles which incorporate gas or dye molecules, a characteristic not required in the present patent application. Furthermore, in addition, the use of functionalized nanoparticles is suggested for selective targeting to diseased cells or tissues, and secondly, the combination of a therapeutic effect for theranostic (therapeutic-diagnostic) treatment of diseased cells/tissues/organs is suggested.

Patent CN107647852(A) "System and method for imaging in organism tissue" discloses a system and a method for the formation of images in the tissue of the organism. The system comprises an ultrasonic wave generation unit, quantum dots particles, and a detection unit. The ultrasound generates sonoluminescence photosignals, while the quantum dot is used to convert the SL-generated photosignals (sonoluminescence) into infrared signals and is preincorporated within the tissue of the organism and the detection unit is used to detect and record the infrared signals to complete the three-dimensional imaging. The depth of measurement can be guaranteed and high resolution can be achieved when the imaging is carried out within the tissue of the organism. It is worth noting that the aforementioned patent concerns the use of sonoluminescence to convert wavelengths in the UV-Visible spectrum into infrared wavelengths, with the use of particular nanoparticles capable of absorbing such radiation and re-emitting it in the range of interest.

On the contrary, in the present patent application, a nanomaterial other than quantum dots is presented that is less toxic and biodegradable and has properties of optical absorption in the UV spectrum and re-emission in the visible, not in the infrared, spectrum. Furthermore, we suggest the use of ZnO nanoparticles as a contrast agent to return precise optical and spectroscopic spectral features, not to emit sonoluminescence in another region of the spectrum (such as the infrared spectrum). Furthermore, the inventors of the present patent application, suggest the use of functionalized nanoparticles for selective targeting to diseased cells or tissues and secondly, the combination also of a therapeutic effect for the theranostic treatment of diseased cells/tissues/organs in the case of joint exploitation of the two prior patents: Italian Patent no. 102017000129243 and Italian Patent application no. IT102018000009966.

Patent US20090297455(A1) entitled "Device for and a method of activating a physiologically effective substance by ultrasonic waves, and a capsule" discloses a device to produce ultrasonic waves (generated by an ultrasonic transducer with a focusing element + position controller) to produce, in turn, sonoluminescence and from this activate the chemical compound, a photosensitizing agent, capable of producing a photodynamic therapy, then based on the generation of radical species. No solid inorganic materials, nor semiconductors, nor in particular zinc oxide, are disclosed in this patent. Neither use of sonoluminescence as part of an imaging system, nor image contrast nor spectral feature detection is disclosed, but only as a light activation medium for photodynamic therapy is described.

Patent WO2017218674(A1) "Sonoluminescence spectroscopy for real-time downhole fluid analysis" discloses a method and related equipment for analyzing fluids at the bottom of boreholes. The patent discloses the use of ultrasonic irradiation to produce sonoluminescence from cavitation in a fluid volume, detecting such light emission with a light-sensitive device, and then obtaining spectral information from measuring the sonoluminescence with a light-sensitive device. From such a spectroscopic measurement, it is possible to estimate a parameter of interest of the fluid, such as its composition, the concentration of chemical elements present in the volume. Therefore, the use of a material as a contrast agent is not suggested, nor is its biomedical application.

### ADVANTAGES OVER THE EXISTING SOLUTIONS AND RESPECTIVE METRICS

It is the object of the present patent application to conjugate the two approaches, i.e., ultrasound irradiation and sonoluminescence photoemission, with the use of ZnO-based micro- or nanomaterials as a contrast agent through an experimental set-up composed of US (either pulsed or continuous, either focused or unfocused) and a ZnO-based micro- or nanomaterial capable of behaving, under controlled ultrasonic conditions, as a contrast agent for a sonoluminescence imaging activity, producing a specific light spectrum which allows highlighting a particular cell, or tissue or organ region for diagnostic purposes.

The present invention takes advantage of the diagnostic approaches illustrated above and intends to address the need to diagnose cancer cells in a living organism.

In particular, it is the first task of the present invention to solve the technical problem of how to reduce the intensity and power of ultrasonic waves needed to generate cavitation (which can be severely damaging for tissues) to sub-toxic and physiologically tolerable levels to generate sonoluminescence. Indeed, such an invention suggests combining ultrasounds and the sonoluminescence generated thereby with ZnO-based nanoparticles to obtain low irradiation intensity, but equally optically intense, effects, in particular by obtaining a luminous signal with a characteristic emission spectrum and determined by the presence of the semiconductor material.

It is a second task of the present invention to solve the technical problem of how to improve the light emission of sonoluminescence in terms of safety relative to both semiconductors already in use, such as quantum dots, precisely by combining it with less cytotoxic and biodegradable ZnO-based nanoparticles, and by avoiding irradiation with external light sources to activate the contrast agent. In particular, as light is an electromagnetic wave with low penetration into tissues (0.5 mm depth of penetration in the ultraviolet region, which extends to a few cm if the wavelength is between 600 and 1300 nm), it is not suitable for irradiation of deep tissues and organs. Furthermore, it can induce phototoxicity (if ultraviolet light) or overheating (if infrared light).

In brief, up to the present time, as far as the Applicant is aware, there are no known solutions which would allow both of the requirements detailed above to be met simultaneously.

For this reason, the present invention intends to protect ZnO-based micro- or nanoparticles as a new contrast agent to assist sonoluminescence and capable of producing, in a controlled manner according to the ultrasonic conditions used, a light emission spectrum with specific optical peculiarities.

Indeed, in the case of the use on tissues and organs, the optical emission properties of the system used, in particular of a ZnO nanoparticle, are in a range between 500 and 1300 nm, where organic tissues absorb less light, compared to regions at lower wavelengths. Furthermore, the optical imaging modality allows important advantages over other diagnostic modalities, such as dynamic, functional, real-time, and spatial information of the organism.

It is also known in the prior art that water is an element present in abundance in almost all tissues of living organisms. Therefore, imaging consisting of pure SL emission in the absence of contrast agents of any nature would be everywhere and without discrimination between tissues. On the contrary, nanoparticle-assisted SL, as suggested in this invention, can discriminate between one cell and another, one tissue/organ and another. This effect can be achieved precisely by using semiconductor nanoparticles with defined optical properties which modify the emission light spectrum. Indeed, semiconductor NPs can absorb the light emission of the SL in a given spectrum and re-emit it at other wavelengths, i.e., compared to nanoparticle-free SL, nanoparticle-assisted SL has very precise optical emission properties and characteristics which can be modulated and varied according to the type of semiconductor, material, doping, and its surface functionalization (as specified below).

Furthermore, pure SL requires the presence of noble gases, such as Ar and He, which are not biologically present in tissues. Therefore, nanoparticle-assisted SL is advantageous because it can occur without the presence of these non-physiological noble gases.

Furthermore, this effect can be achieved through the use of nanometer-sized particles, which can be internalized into specific diseased cells. The preference of ZnO nanoparticles to be internalized in tumor cells relative to their healthy counterparts has already been demonstrated in the prior art. Furthermore, if this effect is not sufficient, it is possible to equip said ZnO nanoparticles with targeting molecules (peptides, antibodies, carbohydrates, sugars, etc.) and thus allow their accumulation only in specific cells/tissues/organs and act as contrast agents to highlight such specific cells/tissues/organs.

The use of nanoparticles preferably below 20 nm in size allows for molecular resolutions of optical imaging relative to regions of diagnostic interest.

Such a system offers as an advantage the depth of penetration into the tissues.

Finally, one can functionalize the nanoparticle with targeting, stabilized, biocompatible agents (polymers, lipid bilayers, metal layers, or other metal oxide layers) to increase its performance in biological and biomedical fields.

The following considerations which further make the present invention advantageous are added to the advantages mentioned above.

Indeed, it is suggested to use ZnO-based micro- or nanoparticles as suggested in the prior art as further improvements to the invention illustrated above:
Italian Patent Application IT102018000009966 filed on 31st October 2018, entitled "Agente sonosensibilizzante e suo metodo di attivazione" [Sonosensitizing agent and activation method thereof], which discloses micro- and nanoparticles of metal oxide appropriately functionalized with specific chemical and hydrophobizing agents to increase the transport of air bubbles on the surface and thus the ability to reduce the cavitation threshold of the liquid medium in which the ultrasonic wave passes and thus ultimately the ability to be used as a contrast agent;
Italian Patent no. 102017000129243 filed on 13th November 2017 entitled: "Nanocostrutto biomimetico non immunogenico per la terapia antitumorale" [Biomimetic non-immunogenic nanoconstruct for the antitumor therapy] and in the corresponding international application published under no. WO 2019092550 Al on 16th May 2019, wherein the use of ZnO-based nanoconstruct is suggested which are:
   a) functionalized with targeting agents to give them selective targeting to diseased cells/tissues/organs;
   b) functionalized with organic molecules or biomolecules, comprising but not limited to polymers, phospholipids, proteins, carbohydrates, to be biocompatible and readily suspended colloidally in the medium for ultrasound irradiation and to promote internalization into the cell;
   c) using formulations to obtain fully biodegradable micro- and/or nanoparticles of ZnO;
   d) using dopants with transition or rare earth metals to amplify, modify, select, the optical emission spectrum of the final light radiation to be detected for imaging.

According to another aspect of the invention, the method for SL nanoparticle-assisted optical imaging which is described is advantageously implementable by making use of the nanoconstructs and the sonosensitizing agent which are the subject of the aforementioned patents with the advantage of providing a theranostic solution (i.e., a solution which is therapeutic and diagnostic at the same time).

It is thus possible to perform SL imaging assisted by nanoparticles and at the same time treat a tumor mass by modulating time and intensity of the applied ultrasound (according to Italian Patent Application IT102018000009966 "Agente sonosensibilizzante e suo metodo di attivazione" [Sonosensitizing agent and activation method thereof]). The therapy can be carried out on several fronts: ROS generation, mechanical damage to the cell, micro-jet streaming, molecular oxygen generation against tumor tissue hypoxia, local overheating effects (hot spots), and consequent hyperthermia of the diseased tissue.

Furthermore, in combination with the Italian Patent no. 102017000129243 entitled "Nanocostrutto biomimetico non immunogenico per la terapia antitumorale" [Biomimetic non-immunogenic nanoconstruct for the antitumor therapy] a theranostic solution is possible in which SL imaging assisted by nanoparticles can be combined with therapy related to the presence of zinc oxide capable, if properly prepared and synthesized and in toxic concentration, to release zinc ions into the tissue. The suggested nanoconstruct will need to be used with targeting agents to avoid side effects to healthy tissues.

Finally, it is possible to combine the present patent application with both of the aforementioned patents to obtain a multimodal, complementary imaging system:
1. Based on ultrasound contrast imaging (see IT 102018000009966);
2. optical fluorescence emission imaging using ultraviolet excitation light or magnetic resonance contrast imaging using ZnO doped and made ferromagnetic or paramagnetic (see IT 102017000129243);
3. nanoparticle-assisted SL imaging, as described in this patent application.

The invention described herein is ultimately successful for its flexibility in the intelligent and synergistic combination of two components, i.e., sonoluminescence and nanoparticles.

Furthermore, given a certain dose, non-toxic a priori, of ZnO nanoparticles, it is possible to decide what activity to perform from ultrasound modulation alone as a stimulus, i.e., imaging only, therapy only, therapy + imaging, and what type of therapy.

Further characteristics and advantages of the invention will be more apparent in light of the detailed description which follows, referring to the accompanying drawings which illustrate a preferred embodiment by way of nonlimiting example.

In the drawings:
fig. 1 shows the apparatus to be used for acquiring spectra to achieve nanoparticle-assisted sonoluminescence contrast imaging according to the present invention;
fig. 2 diagrammatically shows the operating mechanism for generating a photosignal by nanoparticle-assisted ultrasonic irradiation with an apparatus capable of detecting the generated sonoluminescence;
fig. 3 shows a representative example of a sonoluminescence spectrum obtained by irradiating a bidistilled water sample (black curve) and a water sample containing 200 µg/mL of ZnO (gray curve), both with a volume of 2 mL in a polypropylene container. The parameters used for ultrasonic irradiation are frequency 1 MHz, power 50%, duty cycle: 100%; signal acquisition parameters: liquid nitrogen-cooled spectrofluorometer calibrated with a red laser (638 nm), exposure time: 120 s; Number of acquisitions: 1; Grating: 150 lines; Spectrum centered at 550 nm;
figures 4a and 4b show representative examples of sonoluminescence spectra obtained by irradiating with different ultrasonic powers respectively (a) a sample of pure bidistilled water and (b) a sample of water containing 200 µg/mL of zinc oxide (ZnO) nanoparticles;
figures 4c and 4d show the sonoluminescence spectra in an Argon gas saturated atmosphere at ultrasonored powers of (c) 0.9 W/cm² and (d) 1.2 W/cm², to emphasize the spectral differences in the presence or absence of zinc oxide (ZnO) nanoparticles;
figure 4e shows the areas subtended by the sonoluminescence emission curve in an Argon gas-saturated atmosphere in the spectral region from 400 nm to 700 nm at different ultrasonic powers with and without ZnO nanoparticles;
figure 4f shows the SL spectra for water solutions containing 200 µg/mL of ZnO nanoparticles at different ultrasonic powers superimposed on the optical absorption and emission spectra of ZnO in the ultraviolet and visible spectra. Data common to all spectra: volume 2 mL in a polypropylene container, parameters used for ultrasonic irradiation: frequency 1 MHz, duty cycle: 100%; signal acquisition parameters: liquid nitrogen-cooled spectrofluorometer calibrated with a red laser (638 nm), exposure time: 120 s; Number of acquisitions: 1; Grating: 150 lines; Spectrum centered at 550 nm;
figs. 5a and 5b show the sonoluminescence spectra obtained by irradiating with different ultrasonic powers (a) 0.9 W/cm² and (b) 1.8 W/cm² for 2 min of aqueous solutions of 2 mL total volume consisting of a pure bidistilled water sample, a water sample containing 200 µg/mL of zinc oxide (ZnO) nanoparticles, and a water sample containing 200 µg/mL of silica (SiO₂) nanoparticles;
figs. 6a and 6b show the sonoluminescence spectra obtained by irradiating with 1.5 W/cm² of ultrasonic power, respectively, 6a, various solutions of biological relevance, Phosphate Buffer saline (PBS), Live-Cell Imaging (LCI) used in fluorescence microscopy to visualize living cells, cell culture medium (RPMI) and compared with pure water, and 6b the same solutions of biological relevance and pure water containing 200 µg/mL of zinc oxide (ZnO) nanoparticles;
fig. 7 shows a sonoluminescence image acquisition set-up diagram;
figs. 8(a,b,c,e) show sonoluminescence images obtained by irradiating a sample of pure bidistilled water (2 mL) with different ultrasonic powers: (a) 0.9 W/cm², (c) 1.2 W/cm², (e) 1.5 W/cm² and SL images of a water sample containing 200 µg/mL of zinc oxide (ZnO) nanoparticles irradiated with different ultrasonic powers: (a) 0.9 W/cm², (c) 1.2 W/cm², (e) 1.5 W/cm²;
figs. 9 (a,b,c,e,f,g,h,i,) show the sonoluminescence images of various biologically relevant solutions at various powers:
   Live-cell imaging buffers (a) without ultrasonic irradiation, (b) with ultrasound at a power of 0.9 W/cm2, and (c) in addition to 200 ug/mL of zinc oxide (ZnO) nanoparticles;
   the Phosphate Buffer saline (PBS) solution (d) without ultrasonic irradiation, (e) with ultrasound at the power of 0.9 W/cm², and (f) in addition of 200 µg/mL zinc oxide (ZnO) nanoparticles;
   a cell culture medium (RPMI) (g) without ultrasonic irradiation, (h) with ultrasound at a power of 0.9 W/cm², and (i) in addition to 200 µg/mL of zinc oxide (ZnO) nanoparticles;

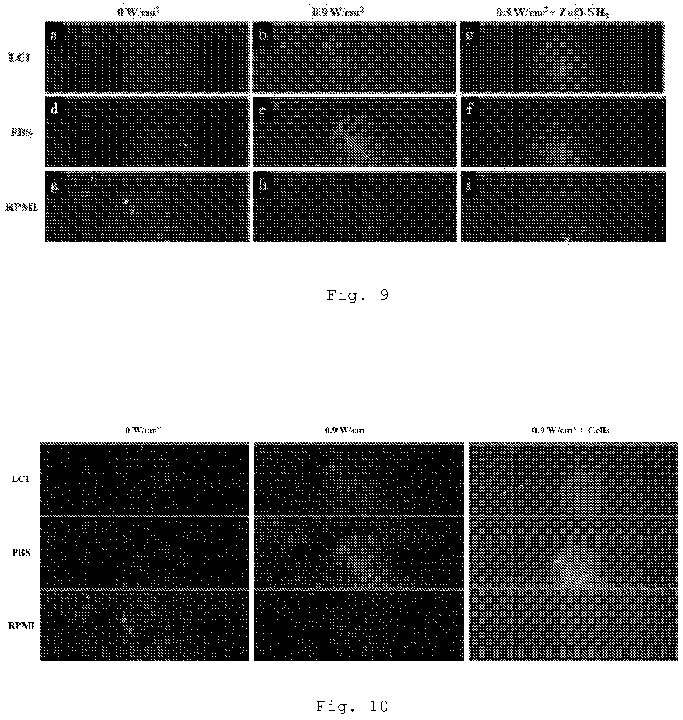

figs. 10 (a,b,c,e,f,g,h,i,) show sonoluminescence images in the presence or absence of living tumor cells (adenocarcinoma KB line, 200'000 cells/ml) treated with the following ultrasonic insonation parameters 100% DC 1 MHz, 2 min exposure, and 2 ml medium. Specifically, the images acquired from three different solutions of biological interest are compared:
   Live-cell imaging buffers (a) without ultrasound irradiation, (b) with ultrasound at a power of 0.9 W/cm2, and (c) in addition to cells and 200 µg/mL of zinc oxide (ZnO) nanoparticles;
   the Phosphate Buffer saline (PBS) solution (d) without ultrasonic irradiation, (e) with ultrasound at the power of 0.9 W/cm², and (f) in addition to cells and 200 ug/mL of zinc oxide (ZnO) nanoparticles;
   a cell culture medium (RPMI) (g) without ultrasound irradiation, (h) with ultrasound at a power of 0.9 W/cm², and (i) in addition to cells and 200 µg/mL of zinc oxide (ZnO) nanoparticles.
   The images have a different contrast from the others but they all look the same (in the panel);

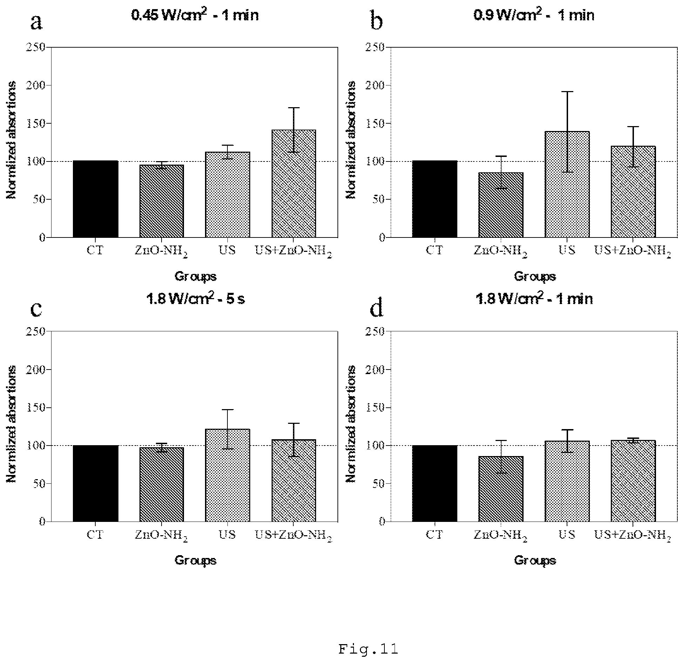

fig. 11 (a,b,c,d) show the viability of adenocarcinoma KB tumor cells following treatment with an ultrasound at various powers and for various times and following internalization of sonoluminescence image contrast agents, i.e. zinc oxide functionalized with amino-propyl groups incubated 24 hours before with the cells at a concentration of 10 µg/mL. The parameters used for ultrasound are 100% Duty cycle (DC), 1 MHz frequency, 3 treatments per day. Data are presented with Standard Error Mean (SEM) bar and repeated at least 3 times. Untreated cells are indicated by CT (control) and are taken as a reference. The viability of only the cells incubated 24 hours with 10 µg/mL ZnO (bars indicated in the graph with ZnO-NH₂), and of cells treated with ultrasound alone at the above parameters (bars indicated with US) and finally cells treated with both ZnO and ultrasound at the above parameters (bars indicated with US+ZnO-NH₂) and with the following different powers and exposure times (a) 0.45 W/cm² for 1 minute, (b) 0.9 W/cm² for 1 minute, (b) 1.8 W/cm² for seconds, (d) 1.8 W/cm² for 1 minute.

### DETAILED DESCRIPTION OF THE INVENTION

With reference to the figures, the invention relates to an apparatus and method for detecting optical signals, spectroscopic investigation of such emitted optical signals, image formation, and possibly therapeutic effects arising from cells and/or in the tissue of an organism.

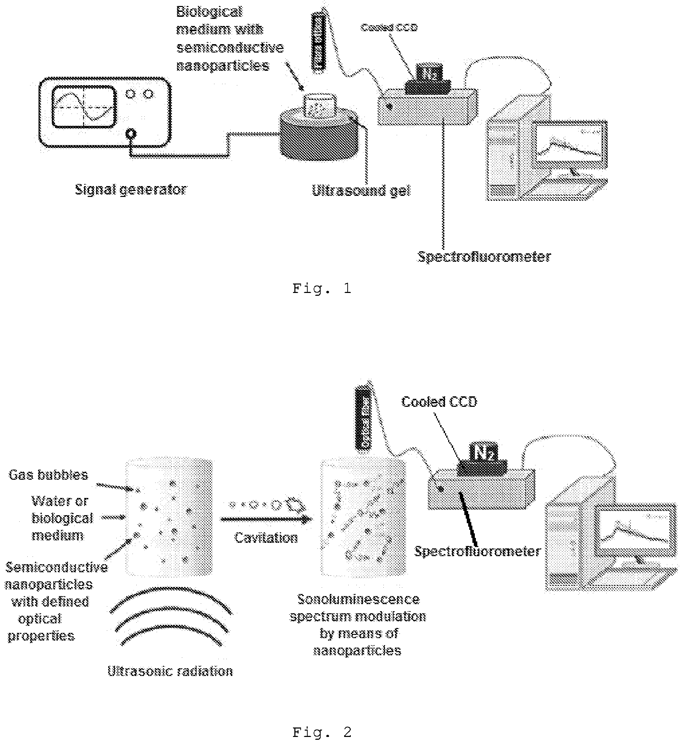

A diagrammatic example of the system for acquiring spectroscopic information related to sonoluminescence contrast imaging is shown in Figure 1, while the mechanism underlying sonoluminescence generation by contrast agent is shown in Figure 2.

As shown in Fig.1, the apparatus comprises an ultrasonic pressure wave generation unit 2 comprising an electrical signal generator 2a and an electromechanical ultrasonic transducer 2b (either pulsed or continuous, either focused or unfocused), a container 4, positioned within the ultrasonic field, with a solution to be treated (comprising an aqueous medium, a saline solution a culture medium for in vitro cells, a tissue or an organ of a living being), within which are dispersed micro or nanoparticles of semiconductor material having optical properties, and a detector 6 of the light radiation emitted by said micro and/or nanoparticles of zinc oxide (ZnO) as a result of the irradiation carried out with the sonoluminescence derived from the US irradiation.

Referring again to Fig. 1, in the illustrated example, such a detector 6 comprises a fiber sensor 6a for receiving the light photo signal, and a spectrofluorometer 6b connected to a computer for processing the sonoluminescence signal.

According to the invention, the contrast imaging method provides that the ultrasounds, applied to a liquid medium, generate cavitation phenomena and sonoluminescence effects. Such a photosignal is partially absorbed, scattered, and re-emitted at different wavelengths (within the ultraviolet and visible light spectrum) by the semiconductor nanoparticles dispersed in the liquid medium, to obtain both spectroscopic and image contrast with precise and defined optical characteristics (Figure 2).

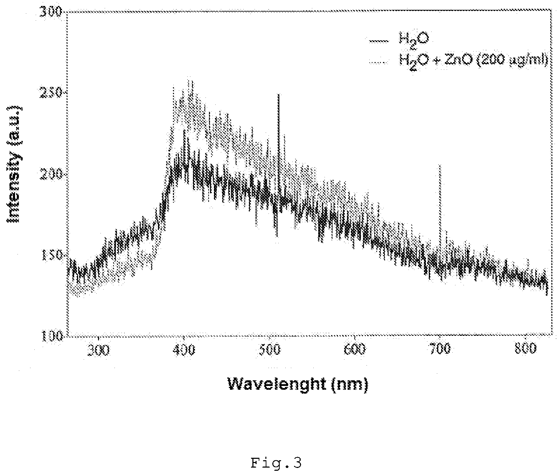

The generated photosignal is collected by an optical sensing unit 6 to return both a two-dimensional and spectroscopic imaging signal (Fig.3, as a representative example) of the region invested by the ultrasonic + particle beam.

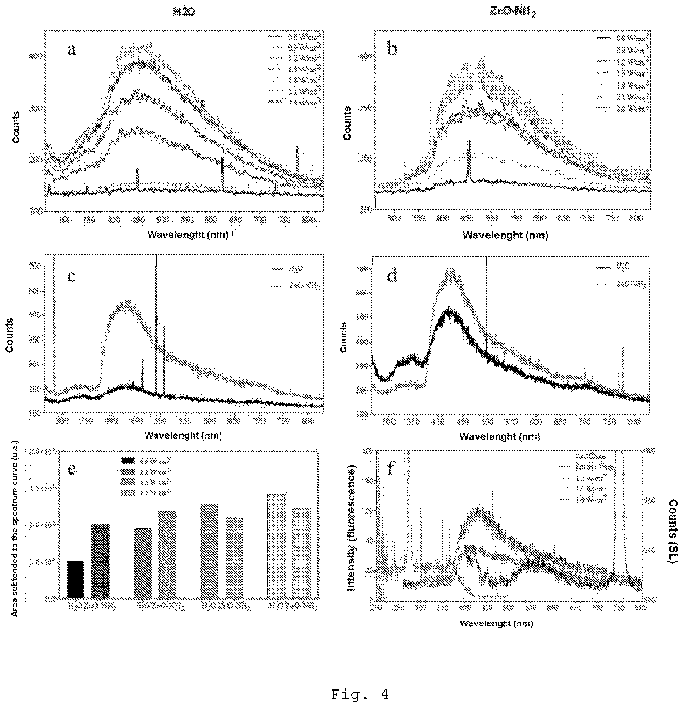

In fig. 4, the sonoluminescence spectra irradiated at different ultrasonic powers are observed for (a) a pure bidistilled water sample and (b) a water sample containing 200 µg/mL zinc oxide (ZnO) nanoparticles. The comparison of the spectra shows the various spectroscopic profiles of sonoluminescence emitted between pure water and water with the contrast agent (ZnO nanoparticles) present. It can also be observed, especially for low ultrasonic powers, that the recorded intensities of the spectra in the presence of ZnO nanoparticles are higher than those recorded from water alone.

To make more obvious the spectroscopic differences of sonoluminescence produced when a contrast agent, such as ZnO semiconductor nanoparticles, is present, the aqueous solutions were saturated with Argon gas and the sonoluminescence spectra were recorded at ultrasonic powers of 0.9 W/cm² (as shown in Fig. 4c) and 1.2 W/cm² (Fig. 4d). The spectra clearly show at both powers the spectral differences in the presence or absence of zinc oxide (ZnO) nanoparticles and the higher signal intensity when ZnO nanoparticles are present.

To quantify the different intensities of the recorded sonoluminescence spectra, fig. 4e shows a bar chart with the areas subtended by the sonoluminescence emission spectrum in an Argon gas-saturated atmosphere in the spectral region from 400 nm to 700 nm and at different ultrasonic powers of water with and without ZnO nanoparticles.

To correlate the SL spectra (at different ultrasonic powers) obtained from water solutions containing 200 µg/mL of ZnO nanoparticles these were superimposed on the optical absorption and emission spectra of ZnO in the ultraviolet and visible, as shown in fig 4f. The charts show that in general ZnO nanoparticles can absorb light radiation in the ultraviolet region between 200 and 400 nm and show fluorescence emission between 500 and 650 nm. Similarly, in the sonoluminescence spectra recorded in water in the presence of ZnO, it can be noted that the abrupt reduction in the spectrum occurs in the ultraviolet region, corresponding to the absorption of ZnO. Instead, the ZnO emission band is superimposed on the sonoluminescence emission.

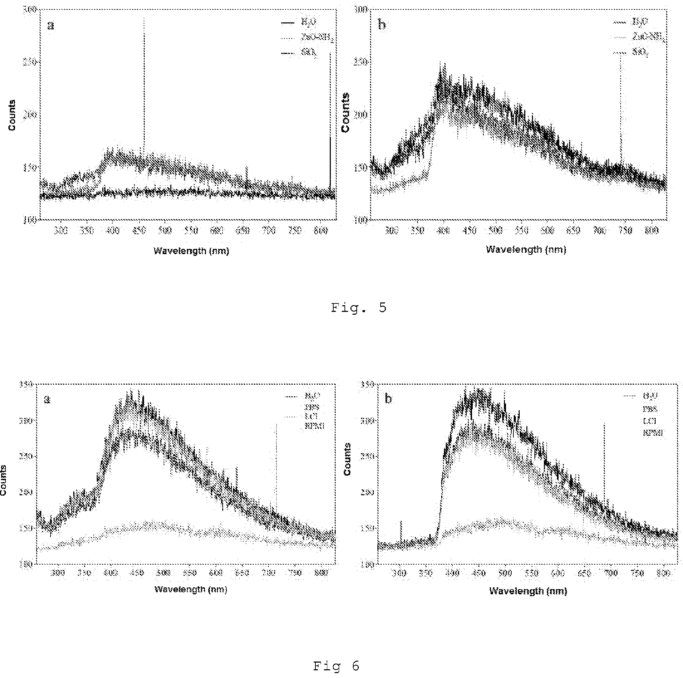

Fig. 5 shows the SL spectra obtained by irradiating at two different ultrasonic powers of pure water, and of water containing 200 µg/mL of semiconductor ZnO and non-semiconductor silica (SiO₂) nanoparticles, are shown. Different spectroscopic characteristics are evident due to the presence of ZnO semiconductor nanoparticles which absorb SL light emission in the ultraviolet region, while silica, which is in the amorphous and not semiconductor state, does not possess these properties.

It is also demonstrated that it is possible to acquire SL signals and related spectra even from solutions other than pure water, and in particular of biological interest. This also demonstrates the wide versatility of the system shown here. Fig. 6a shows sonoluminescence spectra acquired by irradiating with 1.5 W/cm² of ultrasonic power various biologically relevant solutions such as Phosphate Buffer Saline (PBS), Live-Cell Imaging (LCI) used in fluorescence microscopy to visualize living cells, a cell culture medium (RPMI) and compared with pure water. In fig. 6b, we again demonstrate the effectiveness of ZnO semiconductor nanoparticles as a contrast agent for SL imaging. Indeed, all the SL spectra acquired in the same solutions of biological relevance and pure water but containing 200 µg/mL of ZnO nanoparticles present well defined spectral characteristics and in particular a strong reduction of the emission in the ultraviolet region, from 200 to 350 nm and, at equal ultrasonic irradiation, a greater intensity of the emission band of the visible spectrum between 450 and 550 nm.

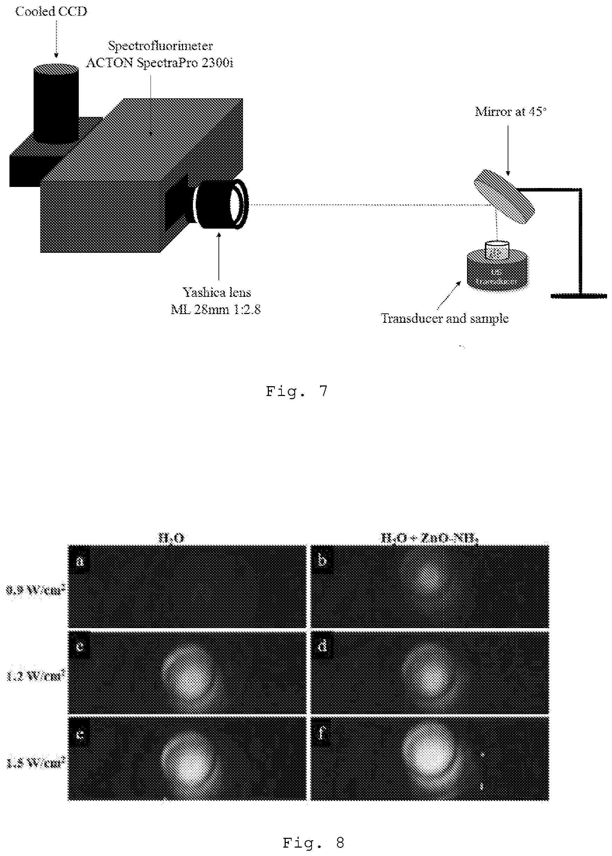

Fig. 7 shows the apparatus to be used for sonoluminescence image acquisition. The apparatus comprises an ultrasonic pressure wave generation unit 2, a container 4, positioned within the ultrasonic field containing a solution to be treated (comprising an aqueous medium, a saline solution a culture medium for in vitro cells, a tissue or an organ of a living being), within which are dispersed micro or nanoparticles of semiconductor material having optical properties, a mirror 5 positioned at 45° to reflect the SL light emission emitted by said micro and/or nanoparticles of zinc oxide (ZnO) as a result of the irradiation carried out with the sonoluminescence derived from the US irradiation towards a light radiation detector 6.

Fig. 8 (a,b,c,e) show the sonoluminescence images obtained with the apparatus described in Fig. 7 by irradiating a sample of pure bidistilled water (with a volume of 2 mL) at different ultrasonic powers: (a) 0.9 W/cm², (c) 1.2 W/cm², (e) 1.5 W/cm² and SL images of the same water sample but containing 200 µg/mL of zinc oxide (ZnO) nanoparticles irradiated with different ultrasonic powers: (a) 0.9 W/cm², (c) 1.2 W/cm², (e) 1.5 W/cm². It can be easily seen that the intensity of light radiation emitted by the container irradiated with US already at low powers (0.9 W/cm²) is much higher when ZnO nanoparticles are present in the aqueous solution. As the ultrasonic power of irradiation increases at 1.2 W/cm² and 1.5 W/cm² it is noted that the light intensity of the SL images also increases for both pure water samples and water samples containing ZnO nanoparticles and that the intensity of the latter is markedly higher.
Fig. 9 is presented to demonstrate that it is possible to acquire SL images even in solutions of biological relevance and that this acquisition is facilitated by the presence of a contrast agent such as ZnO nanoparticles. It shows sonoluminescence images of various biologically relevant solutions at various powers: (a) Live cell imaging buffer without ultrasonic irradiation, (b) with ultrasound at a power of 0.9 W/cm², and (c) in addition to 200 µg/mL of zinc oxide (ZnO) nanoparticles;
Phosphate Buffer saline (PBS) solution (d) without ultrasonic irradiation, (e) with ultrasound at the power of 0.9 W/cm², and (f) in addition of 200 µg/mL zinc oxide (ZnO) nanoparticles;
cell culture medium (RPMI) (g) without ultrasonic irradiation, (h) with ultrasound at a power of 0.9 W/cm², and (i) in addition to 200 µg/mL of zinc oxide (ZnO) nanoparticles. In all images in which ZnO nanoparticles are present in solution (Figs. 9 c,f,i) it is possible to note that an SL image is present, albeit at low intensity due to the low intensity of ultrasound irradiation and that this has a higher intensity than in the condition in which the sample is the only solution without nanoparticles (figs. 9b,e,h);
figs. 10 (a-g) show sonoluminescence images in the presence or absence of living adenocarcinoma KB line tumor cells treated with ultrasound in three different solutions of biological interest. As noted in fig. 10a (relating to live-cell imaging buffer -LCI medium), fig. 10d (relating to Phosphate Buffer saline - PBS solution) and fig. 10g (relating to RPMI cell culture medium) without ultrasonic irradiation, no images can be acquired. If ultrasound (power 0.9 W/cm²) is delivered to the cell-free solutions, a very weak imaging signal is obtained for LCI (fig.10b) and PBS (fig. 10e) solutions and null in the case of RPMI culture medium. On the contrary, in the presence of cells and zinc oxide (ZnO) nanoparticles the obtained sonoluminescence signal is clearly visible, more markedly for LCI media (Fig. 10e) and for PBS (Fig. 10f) to demonstrate that in specific media useful for cancer cell culture, zinc oxide nanoparticles exhibit an image contrast effect by increasing signal brightness. No signal is detected in the case of cells and ZnO grown in cell culture medium, due to the opacity and staining of this solution and the presence of numerous substances (various nutrients, proteins, antibiotics, amino acids, antioxidants) in it. It is worth noting that the images presented in Fig. 10 have equal contrast with each other but are different from the preceding ones in Figs. 9 and 8.

To demonstrate the biocompatibility and absence of toxicity to cells of the sonoluminescence imaging contrast suggested in the present invention, fig. 11 (a,b,c,d) show the cell viability assays on the line of adenocarcinoma KB tumor cells following treatment with an ultrasound at various powers and for various times and following internalization of sonoluminescence imaging agents (zinc oxide functionalized with amino-propyl groups, ZnO-NH₂), incubated 24 hours before with the cells at a concentration of 10 µg/mL. As can be seen, all cells treated with the combination of ultrasound and preincubated 24 hours earlier with the ZnO nanoparticles show viability equal if not higher than the respective controls, i.e. to the untreated cells (indicated with CT - control) to the cells alone incubated 24 hours with 10 µg/mL of ZnO (bars indicated in the graph with ZnO-NH₂) and in the absence of ultrasound, and to cells treated with ultrasound alone (bars indicated with US) but in the absence of ZnO. Various parameters of powers and exposure times were explored (a) 0.45 W/cm² for 1 minute, (b) 0.9 W/cm² for 1 minute, (b) 1.8 W/cm² for 5 seconds, (d) 1.8 W/cm² for 1 minute to observe the cellular response to various ultrasonic irradiation conditions useful for producing the sonoluminescence images or spectra.

According to a peculiar feature of the invention, the ultrasound system combined with nanoparticles can also be used to perform theranostic treatments, which consist of exploiting the image contrast properties (mentioned above) and producing toxic species and mechanical damage due to the interaction of ultrasonic cavitation with nanoparticles in diseased cells or tissues (e.g., cancer) and produce a therapeutic effect.

Such a method offers as advantages the depth of penetration into tissues, the possibility to be selective towards only diseased tissues, and offers the multimodality of therapy + imaging simultaneously.

From that illustrated so far, we can summarize the innovative feature of the present invention, i.e., that of conjugating in a single experimental set-up two approaches, namely ultrasound irradiation and sonoluminescence photoemission with the use of ZnO-based micro or nanomaterials to obtain an image contrast system and produce a specific light emission spectrum, to highlight a particular cellular region, or tissue or organ for diagnostic purposes.

To this end, a sonoluminescence contrast imaging apparatus comprises:
I) at least one solution to be treated with a contrast agent dispersed in said solution to be treated, comprising micro and/or nanoparticles of zinc oxide (ZnO);
II) at least one source of ultrasounds (US) comprising a signal generator and an electromechanical transducer; and
III) at least one ultrasonic transfer medium to said solution to be treated.

In an embodiment of said sonoluminescence contrast imaging apparatus, the source of ultrasounds comprises a signal generator, an electromechanical transducer, a signal amplifier, an oscilloscope, and a resistive load terminator.

The invention allows obtaining effects already at a low intensity of irradiation with US (therefore without the contraindication of toxicity) but equally optically intense, in particular obtaining a luminous signal with a characteristic emission spectrum and determined by the presence of the semiconductor material.

Furthermore, the present invention is completely innovative because it does not use conventional quantum dots, but rather less cytotoxic and biodegradable ZnO-based nanoparticles. It also avoids irradiation with external light sources to activate the contrast agent, eliminating problems of poor penetration and phototoxicity (if ultraviolet light) or overheating (if infrared light).

Imaging consisting of pure SL emission assisted by nanoparticles can become discriminatory between one cell and another, one tissue/organ and another. This effect can be achieved by using semiconductor nanoparticles with defined optical properties which modify the emission light spectrum.

Nanoparticle-assisted SL has distinct optical emission properties and characteristics which can be modulated and varied according to the type of semiconductor, material, doping, and surface functionalization.

Furthermore, pure SL requires the presence of noble gases, such as Ar and He, which are not biologically present in tissues. Therefore, nanoparticle-assisted SL is innovative because it can occur without the presence of noble gases, such as Ar and He, which are not physiologically and biologically present in tissues.

The optical imaging modality allows obtaining important advantages over other diagnostic modalities, such as dynamic, functional, real-time, and spatial information of the organism. In particular, nanometer-sized particles can be internalized into specific diseased cells. The preference of ZnO nanoparticles to be internalized in tumor cells relative to their healthy counterparts has already been demonstrated in the prior art. Furthermore, if this effect is not sufficient, it is possible to equip said ZnO nanoparticles with targeting molecules (peptides, antibodies, carbohydrates, sugars, etc.) and thus allow their accumulation only in specific cells/tissues/organs and act as contrast agents to highlight such specific cells/tissues/organs.

The use of nanostructured nanoparticles preferably below 20 nm in size allows for molecular resolutions of optical imaging relative to regions of diagnostic interest.

In this regard, micro and/or nanoparticles of zinc oxide (ZnO) have sizes ranging from 1 nm to 100,000 nm, where microparticles are normally between 500 nm and 20,000 nm, and nanoparticles between 1 nm and 500 nm.

The use of ZnO nanoparticles is innovative because it offers a non-toxic and fully biodegradable solution.

The present nanoparticle-assisted SL system also offers the advantage of the depth of tissue penetration by virtues of the use of ultrasounds as the source for SL.

It is also possible to functionalize the nanoparticle with targeting, stabilizing, agents.

For example, the zinc oxide (ZnO) micro- and/or nanoparticles may have surfaces functionalized with organic, metal-organic, metal, or coordination agent groups, or with a dye element, having fluorescent properties, or have surfaces coated with mono- or multilayers of organic agents.

In other embodiments, the zinc oxide (ZnO) nanoparticles are conjugated or doped with an element which amplifies the emission light radiation in the ultraviolet-visible spectrum, or with an element which modifies the frequency spectrum of the emission light radiation of said zinc oxide, or with an element which modifies the spectrum and can broaden said spectrum to comprise the frequencies of the infrared spectrum.

According to the invention, the concentration in the contrast agent of micro and/or nanoparticles of zinc oxide (ZnO) is varied from 0.1 µg/mL to 10 mg/mL, preferably from 1 µg/mL to 500 ~µg/mL.

As further improvements to the invention illustrated above, the use is provided of ZnO-based micro- or nanoparticles as described in the two priorities, i.e., Italian Patent Application no. IT 102018000009966 filed on 31st October 2018 and entitled "Agente sonosensibilizzante e suo metodo di attivazione" [Sonosensitizing agent and activation method thereof], Italian Patent no. 102017000129243 filed on 13th November 2017 and entitled "Nanocostrutto biomimetico non immunogenico per la terapia antitumorale" [Biomimetic non-immunogenic nanoconstruct for the antitumor therapy] and in the corresponding international application published under no. WO 2019092550 A1 on 16th May 2019 to provide a theranostic solution, or perform multimodal and complementary imaging.

The present invention is ultimately successful for its flexibility in the intelligent and synergistic combination of two components, i.e., sonoluminescence and nanoparticles.

Indeed, it is possible to decide which activity to perform from ultrasound modulation alone as a stimulus, i.e.,

imaging only, therapy only, therapy + imaging, which type of therapy.

One embodiment of the invention has been described herein for the sake of illustration. However, there are numerous variants which, based on the same inventive concept, are covered by this industrial property right.

A similar solution as an inventive concept, but different both in scientific relevance and in a potential application, is to couple the ZnO used as a contrast agent, a sound-sensitive molecule capable of amplifying the response to external pressure stimulus.

## Claims

1. A sonoluminescence contrast imaging method to produce a specific light spectrum, to highlight a particular cell, tissue or organ region for diagnostic purposes which comprises the following steps:
A) providing at least one contrast agent comprising micro and/or nanoparticles of zinc oxide (ZnO);
B) preparing a solution comprising an aqueous medium, a saline solution, an in vitro cell culture medium, a tissue or an organ of a living being of diagnostic interest;
C) dispersing the contrast agent in said solution;
D) providing a source of ultrasounds (US), comprising a signal generator and an electromechanical transducer, a signal amplifier, an oscilloscope, and a resistive terminator load; where the ultrasounds have a variable frequency from 20 kHz to 100 MHz and power varying from 0.01 W cm⁻² to 25,000 W-cm⁻²;
E) activating the source of ultrasounds (US), wherein the total activation time, possibly administered in multiple steps or cycles, is variable from 1 second to 12 hours, preferably from 5 seconds to 30 minutes;
F) placing the solution with dispersed contrast agent in the ultrasonic field;
G) inducing cavitation in said solution with a dispersed contrast agent, capable of lowering the cavitation threshold of the solution, in particular by providing packages of gaseous bubbles by virtue of its surface conformation;
H) generating sonoluminescence light signals from the cavitation bubbles with a characteristic spectrum in the ultraviolet and visible region so that said sonoluminescence light signals are collected, absorbed, scattered and re-emitted by the contrast agent,
wherein
the luminous re-emission signal from the contrast agent provides an increase or decrease in intensity at precise wavelengths comprised in the UV-visible spectrum due to the presence of the contrast agent; and
I) collecting said luminous signal generated by the contrast agent by means of an optical detection unit to return a both two-dimensional image and spectroscopic signal of the particular cell, tissue or organ region.

2. A sonoluminescence contrast imaging method according to claim 1, **characterized in that** in step D), the ultrasounds have frequency varying from 40 kHz to 3 MHz and power varying from 0.1 W'cm⁻² to 10 W-cm⁻².

3. A sonoluminescence contrast imaging method according to claim 1, wherein in step E), the total activation time, possibly administered in multiple steps or cycles, is variable from 5 seconds to 30 minutes.

4. A sonoluminescence contrast imaging method according to claim 1, **characterized in that** the micro and/or nanoparticles of zinc oxide (ZnO) present in the contrast agent have dimensions varying from 1 nm to 100.000 nm, which makes it possible to obtain, already at a low intensity of irradiation with US, without contraindication of toxicity, a luminous signal with a characteristic emission spectrum and determined by the presence of said semiconductor material, without needing the presence of noble gases, such as Ar and He, which are not biologically present in human tissues, unlike what happens in the sonoluminescence not assisted by nanoparticles.

5. A sonoluminescence contrast imaging method according to claim 1, **characterized in that** the micro and/or nanoparticles present in the contrast agent are comprised between 500 nm and 20,000 nm, and the nanoparticles between 1 nm and 500 nm.

6. A sonoluminescence contrast imaging apparatus to produce a specific light spectrum, to highlight a particular cell, tissue or organ region for diagnostic purposes comprising:
I) at least one solution comprising an aqueous medium, a saline solution, an in vitro cell culture medium, a tissue or an organ of a living being of diagnostic interest;
II) a contrast agent dispersed in said solution, comprising micro and/or nanoparticles of zinc oxide (ZnO);
III) at least one source of ultrasounds (US) comprising a signal generator and an electromechanical transducer; and
IV) at least one ultrasonic transfer medium to said solution.

7. A sonoluminescence contrast imaging apparatus according to claim 6, wherein the source of ultrasounds comprises a signal generator, an electromechanical transducer, a signal amplifier, an oscilloscope, and a resistive load terminator.

8. A contrast agent for use in the sonoluminescence contrast imaging method according to claim 1 comprising nanostructured micro and/or nanoparticles of zinc oxide (ZnO) or micro and/or nanoparticles of zinc oxide conjugated or doped with an element which amplifies the emission light radiation in the ultraviolet-visible spectrum, or with an element which modifies the frequency spectrum of the emission light radiation of said zinc oxide, or with an element which modifies the spectrum and can broaden said spectrum to comprise the frequencies of the infrared spectrum for use in theranostic treatments, which consist in exploiting the image contrast properties and producing toxic species and mechanical damage due to the interaction of ultrasonic cavitation with said micro and/or nanoparticles in diseased cells or tissues (e.g., cancerous) or stem or immune cells and producing a therapeutic effect.

9. The contrast agent according to claim 8, wherein the zinc oxide (ZnO) micro- and/or nanoparticles have surfaces functionalized with organic, metal-organic, metal or coordination agent groups, or with a coloring element, having fluorescence properties, or have surfaces coated with mono- or multilayers of organic agents.

10. The contrast agent according to any one of the claims from 8 onwards, wherein the micro and/or nanoparticles of zinc oxide (ZnO) have sizes ranging from 1 nm to 100,000 nm.

11. The contrast agent according to any one of the claims from 8 onwards, wherein the micro and/or nanoparticles are comprised between 500 nm and 20,000 nm, and the nanoparticles are between 1 nm and 500 nm.

12. The contrast agent according to any one of the claims from 8 onwards, wherein the concentration of micro and/or nanoparticles of zinc oxide (ZnO) is variable from 0.1 µg/mL to 10 mg/mL.

13. The contrast agent according to any one of the claims from 8 onwards, wherein the concentration of micro and/or nanoparticles of zinc oxide (ZnO) is variable from 1 µg/mL to 500 µg/mL.

## Patentansprüche

1. Sonolumineszenz-Kontrastbildgebungsverfahren zur Erzeugung eines spezifischen Lichtspektrums, um eine bestimmte Zelle, ein bestimmtes Gewebe oder eine bestimmte Organregion zu diagnostischen Zwecken hervorzuheben, das die folgenden Schritte umfasst:
A) Bereitstellen mindestens eines Kontrastmittels, das Mikro- und/oder Nanopartikel aus Zinkoxid (ZnO) umfasst;
B) Herstellen einer Lösung, die ein wässriges Medium, eine Salzlösung, ein Invitro-Zellkulturmedium, ein Gewebe oder ein Organ eines lebenden Wesens von diagnostischem Interesse umfasst;
C) Dispergieren des Kontrastmittels in der Lösung;
D) Bereitstellen einer Ultraschallquelle (US), die einen Signalgenerator und einen elektromechanischen Wandler, einen Signalverstärker, ein Oszilloskop und eine ohmsche Abschlusslast umfasst; wobei die Ultraschallwellen eine variable Frequenz von 20 kHz bis 100 MHz und eine Leistung von 0,01 W cm⁻² bis 25.000 W-cm⁻² aufweisen;
E) Aktivieren der Ultraschallquelle (US), wobei die Gesamtaktivierungszeit, die möglicherweise in mehreren Schritten oder Zyklen erfolgt, zwischen 1 Sekunde und 12 Stunden, vorzugsweise zwischen 5 Sekunden und 30 Minuten, variiert;
F) Einbringen der Lösung mit dispergiertem Kontrastmittel in das Ultraschallfeld;
G) Induzieren von Kavitation in der Lösung mit einem dispergierten Kontrastmittel, das die Kavitationsschwelle der Lösung senken kann, insbesondere durch Bereitstellen von Gasblasenpaketen aufgrund ihrer Oberflächenkonformation;
H) Erzeugen von Sonolumineszenz-Lichtsignalen aus den Kavitationsblasen mit einem charakteristischen Spektrum im ultravioletten und sichtbaren Bereich, so dass die Sonolumineszenz-Lichtsignale vom Kontrastmittel gesammelt, absorbiert, gestreut und wieder emittiert werden, wobei das leuchtende Wiederemissionssignal vom Kontrastmittel aufgrund des Vorhandenseins des Kontrastmittels eine Zunahme oder Abnahme der Intensität bei präzisen Wellenlängen im UV-sichtbaren Spektrum bewirkt; und
I) Sammeln des vom Kontrastmittel erzeugten Lichtsignals mittels einer optischen Detektionseinheit, um sowohl ein zweidimensionales Bild als auch ein spektroskopisches Signal der bestimmten Zelle, des Gewebes oder der Organregion zurückzugeben.

2. Sonolumineszenz-Kontrastbildgebungsverfahren nach Anspruch 1, **dadurch gekennzeichnet, dass** in Schritt D) die Ultraschallwellen eine Frequenz im Bereich von 40 kHz bis 3 MHz und eine Leistung im Bereich von 0,1 W cm⁻² bis 10 W cm⁻² aufweisen.

3. Sonolumineszenz-Kontrastbildgebungsverfahren nach Anspruch 1, wobei in Schritt E) die Gesamtaktivierungszeit, die möglicherweise in mehreren Schritten oder Zyklen verabreicht wird, zwischen 5 Sekunden und 30 Minuten variiert.

4. Sonolumineszenz-Kontrastbildgebungsverfahren nach Anspruch 1, **dadurch gekennzeichnet, dass** die im Kontrastmittel vorhandenen Mikro- und/oder Nanopartikel aus Zinkoxid (ZnO) Abmessungen von 1 nm bis 100.000 nm aufweisen, wodurch bereits bei einer geringen Bestrahlungsintensität mit Ultraschallwellen ohne Kontraindikationen hinsichtlich der Toxizität ein Leuchtsignal mit einem charakteristischen Emissionsspektrum erhalten werden kann, das durch das Vorhandensein des Halbleitermaterials bestimmt wird, ohne dass Edelgase wie Ar und He erforderlich sind, die im Gegensatz zur Sonolumineszenz ohne Nanopartikel in menschlichen Geweben nicht biologisch vorhanden sind.

5. Sonolumineszenz-Kontrastbildgebungsverfahren nach Anspruch 1, **dadurch gekennzeichnet, dass** die im Kontrastmittel vorhandenen Mikro- und/oder Nanopartikel zwischen 500 nm und 20.000 nm und die Nanopartikel zwischen 1 nm und 500 nm groß sind.

6. Sonolumineszenz-Kontrastbildgebungsvorrichtung zur Erzeugung eines spezifischen Lichtspektrums, um eine bestimmte Zelle, ein bestimmtes Gewebe oder einen bestimmten Organbereich zu diagnostischen Zwecken hervorzuheben, umfassend:
I) mindestens eine Lösung, die ein wässriges Medium, eine Salzlösung, ein Invitro-Zellkulturmedium, ein Gewebe oder ein Organ eines lebenden Wesens von diagnostischem Interesse umfasst;
II) ein in der Lösung dispergiertes Kontrastmittel, das Mikro- und/oder Nanopartikel aus Zinkoxid (ZnO) umfasst;
III) mindestens eine Ultraschallquelle (US), die einen Signalgenerator und einen elektromechanischen Wandler umfasst; und
IV) mindestens ein Ultraschallübertragungsmedium zu der Lösung.

7. Sonolumineszenz-Kontrastbildgebungsvorrichtung nach Anspruch 6, wobei die Ultraschallquelle einen Signalgenerator, einen elektromechanischen Wandler, einen Signalverstärker, ein Oszilloskop und einen ohmschen Lastabschluss umfasst.

8. Kontrastmittel zur Verwendung in dem Sonolumineszenz-Kontrastbildgebungsverfahren nach Anspruch 1, umfassend nanostrukturierte Mikro- und/oder Nanopartikel aus Zinkoxid (ZnO) oder Mikro- und/oder Nanopartikel aus Zinkoxid, die mit einem Element konjugiert oder dotiert sind, das die Emissionslichtstrahlung im ultraviolett-sichtbaren Spektrum verstärkt, oder mit einem Element, das das Frequenzspektrum der Emissionslichtstrahlung des Zinkoxids modifiziert, oder mit einem Element, das das Spektrum modifiziert und das Spektrum um die Frequenzen des Infrarotspektrums erweitern kann, zur Verwendung in theranostischen Behandlungen, die darin bestehen, die Bildkontrasteigenschaften auszunutzen und toxische Spezies und mechanische Schäden aufgrund der Wechselwirkung von Ultraschallkavitation mit den Mikro- und/oder Nanopartikeln in erkrankten Zellen oder Geweben (z. B. Krebszellen) oder Stamm- oder Immunzellen zu erzeugen und eine therapeutische Wirkung zu erzielen.

9. Kontrastmittel nach Anspruch 8, wobei die Zinkoxid (ZnO)-Mikro- und/oder Nanopartikel Oberflächen aufweisen, die mit organischen, metallorganischen, metallischen oder Koordinationsmittelgruppen oder mit einem Farbstoffelement mit Fluoreszenzeigenschaften funktionalisiert sind, oder Oberflächen aufweisen, die mit einer oder mehreren Schichten organischer Mittel beschichtet sind.

10. Kontrastmittel nach einem der Ansprüche 8 oder 9, wobei die Mikro- und/oder Nanopartikel aus Zinkoxid (ZnO) Größen im Bereich von 1 nm bis 100.000 nm aufweisen.

11. Kontrastmittel nach einem der Ansprüche 8 bis 10, wobei die Mikro- und/oder Nanopartikel zwischen 500 nm und 20.000 nm groß sind und die Nanopartikel zwischen 1 nm und 500 nm groß sind.

12. Kontrastmittel nach einem der Ansprüche 8 bis 11, wobei die Konzentration der Mikro- und/oder Nanopartikel aus Zinkoxid (ZnO) zwischen 0,1 µg/ml und 10 mg/ml variiert.

13. Kontrastmittel nach einem der Ansprüche 8 bis 12, wobei die Konzentration der Mikro- und/oder Nanopartikel aus Zinkoxid (ZnO) zwischen 1 µg/ml und 500 µg/ml variiert.

## Revendications

1. Procédé d'imagerie de contraste par sonoluminescence pour produire un spectre lumineux spécifique afin de mettre en évidence une région particulière de cellule, de tissu ou d'organe à des fins diagnostiques qui comprend les étapes suivantes :
A) la fourniture d'au moins un agent de contraste comprenant des microparticules et/ou des nanoparticules d'oxyde de zinc (ZnO) ;
B) la préparation d'une solution comprenant un milieu aqueux, une solution saline, un milieu de culture cellulaire in vitro, un tissu ou un organe d'un être vivant d'intérêt diagnostique ;
C) la dispersion de l'agent de contraste dans ladite solution ;
D) la fourniture d'une source d'ultrasons (US), comprenant un générateur de signaux et un transducteur électromécanique, un amplificateur de signaux, un oscilloscope et une charge résistive de terminaison ; les ultrasons ayant une fréquence variable de 20 kHz à 100 MHz et une puissance variant de 0,01 W cm⁻² à 25 000 W cm⁻² ;
E) l'activation de la source d'ultrasons (US), la durée totale d'activation, éventuellement administrée en plusieurs étapes ou cycles, étant variable de 1 seconde à 12 heures, de préférence de 5 secondes à 30 minutes ;
F) le placement de la solution contenant l'agent de contraste dispersé dans le champ ultrasonore ;
G) l'induction de cavitation dans ladite solution avec un agent de contraste dispersé, capable d'abaisser le seuil de cavitation de la solution, notamment en produisant des paquets de bulles gazeuses grâce à sa conformation de surface ;
H) la génération de signaux lumineux de sonoluminescence à partir des bulles de cavitation présentant un spectre caractéristique dans la région de l'ultraviolet et du visible, de sorte que lesdits signaux lumineux de sonoluminescence sont collectés, absorbés, diffusés et réémis par l'agent de contraste, le signal de réémission lumineux provenant de l'agent de contraste produisant une augmentation ou une diminution de l'intensité à des longueurs d'onde précises comprises dans le spectre UV-visible en raison de la présence de l'agent de contraste ; et
I) la collecte dudit signal lumineux généré par l'agent de contraste au moyen d'une unité de détection optique afin de renvoyer à la fois une image bidimensionnelle et un signal spectroscopique de la région particulière de cellule, de tissu ou d'organe.

2. Procédé d'imagerie de contraste par sonoluminescence selon la revendication 1, **caractérisé en ce qu'**à l'étape D), les ultrasons ont une fréquence variant de 40 kHz à 3 MHz et une puissance variant de 0,1 W·cm⁻² à 10 W cm⁻².

3. Procédé d'imagerie de contraste par sonoluminescence selon la revendication 1, dans lequel à l'étape E), le temps d'activation total, éventuellement administré en plusieurs étapes ou cycles, est variable de 5 secondes à 30 minutes.

4. Procédé d'imagerie de contraste par sonoluminescence selon la revendication 1, **caractérisé en ce que** les microparticules et/ou nanoparticules d'oxyde de zinc (ZnO) présentes dans l'agent de contraste ont des dimensions variant de 1 nm à 100 000 nm, ce qui permet d'obtenir, dès une faible intensité d'irradiation par US, sans contre-indication de toxicité, un signal lumineux présentant un spectre d'émission caractéristique et déterminé par la présence dudit matériau semi-conducteur, sans nécessiter la présence de gaz nobles, tels que l'Ar et l'He, qui ne sont pas biologiquement présents dans les tissus humains, contrairement à ce qui se passe dans la sonoluminescence non assistée par nanoparticules.

5. Procédé d'imagerie de contraste par sonoluminescence selon la revendication 1, **caractérisé en ce que** les microparticules et/ou nanoparticules présentes dans l'agent de contraste sont comprises entre 500 nm et 20 000 nm, et les nanoparticules entre 1 nm et 500 nm.

6. Appareil d'imagerie de contraste par sonoluminescence pour produire un spectre lumineux spécifique afin de mettre en évidence une région particulière de cellule, de tissu ou d'organe à des fins de diagnostic, comprenant :
I) au moins une solution comprenant un milieu aqueux, une solution saline, un milieu de culture cellulaire in vitro, un tissu ou un organe d'un être vivant d'intérêt diagnostique ;
II) un agent de contraste dispersé dans ladite solution, comprenant des microparticules et/ou nanoparticules d'oxyde de zinc (ZnO) ;
III) au moins une source d'ultrasons (US) comprenant un générateur de signaux et un transducteur électromécanique ; et
IV) au moins un milieu de transfert d'ultrasons vers ladite solution.

7. Appareil d'imagerie de contraste par sonoluminescence selon la revendication 6, dans lequel la source d'ultrasons comprend un générateur de signaux, un transducteur électromécanique, un amplificateur de signaux, un oscilloscope et un terminateur de charge résistive.

8. Agent de contraste pour une utilisation dans le procédé d'imagerie de contraste par sonoluminescence selon la revendication 1, comprenant des microparticules et/ou nanoparticules nanostructurées d'oxyde de zinc (ZnO) ou des microparticules et/ou nanoparticules d'oxyde de zinc conjuguées ou dopées avec un élément qui amplifie le rayonnement lumineux d'émission dans le spectre ultraviolet-visible, ou avec un élément qui modifie le spectre de fréquence du rayonnement lumineux d'émission dudit oxyde de zinc, ou avec un élément qui modifie le spectre et peut élargir ledit spectre pour inclure les fréquences du spectre infrarouge, pour une utilisation dans des traitements théranostiques, qui consistent à exploiter les propriétés de contraste de l'image et à produire des espèces toxiques et des dommages mécaniques dus à l'interaction de la cavitation ultrasonore avec lesdites microparticules et/ou nanoparticules dans des cellules ou tissus malades (par exemple, cancéreux) ou des cellules souches ou immunitaires, et à produire un effet thérapeutique.

9. Agent de contraste selon la revendication 8, dans lequel les microparticules et/ou nanoparticules d'oxyde de zinc (ZnO) présentent des surfaces fonctionnalisées par des groupes organiques, organométalliques, métalliques ou d'agents de coordination, ou par un élément colorant, présentant des propriétés de fluorescence, ou présentent des surfaces recouvertes de monocouches ou multicouches d'agents organiques.

10. Agent de contraste selon l'une quelconque des revendications 8 et suivantes, dans lequel les microparticules et/ou nanoparticules d'oxyde de zinc (ZnO) présentent des tailles comprises entre 1 nm et 100 000 nm.

11. Agent de contraste selon l'une quelconque des revendications 8 et suivantes, dans lequel les microparticules et/ou nanoparticules sont comprises entre 500 nm et 20 000 nm, et les nanoparticules sont comprises entre 1 nm et 500 nm.

12. Agent de contraste selon l'une quelconque des revendications 8 et suivantes, dans lequel la concentration en microparticules et/ou nanoparticules d'oxyde de zinc (ZnO) est variable de 0,1 µg/mL à 10 mg/mL.

13. Agent de contraste selon l'une quelconque des revendications 8 et suivantes, dans lequel la concentration en microparticules et/ou nanoparticules d'oxyde de zinc (ZnO) est variable de 1 µg/mL à 500 µg/mL.
